Europäisches Patentamt

European Patent Office

Office européen des brevets

(11) Publication number: **0 284 100**
**A2**

# EUROPEAN PATENT APPLICATION

(21) Application number: 88104868.0

(22) Date of filing: 25.03.88

(51) Int. Cl.⁴: **G06F 9/38**

(30) Priority: 27.03.87 JP 74913/87
02.06.87 JP 139146/87

(43) Date of publication of application:
28.09.88 Bulletin 88/39

(84) Designated Contracting States:
DE FR GB IT

(71) Applicant: **NEC CORPORATION**
**33-1, Shiba 5-chome, Minato-ku**
**Tokyo 108(JP)**

(72) Inventor: **Kimura, Shinya c/o NEC Corporation**
**33-1, Shiba 5-chome**
**Minato-ku Tokyo(JP)**

(74) Representative: **Glawe, Delfs, Moll & Partner**
**Patentanwälte**
**Postfach 26 01 62 Liebherrstrasse 20**
**D-8000 München 26(DE)**

(54) **Information processor having instruction prefetch function.**

(57) An instruction prefetch control circuit employed an information processor is disclosed. The circuit includes a queue register, a first pointer designating an address location of the queue register into which a prefetched instruction is to be written, and a second pointer designating an address location of the queue register which stores an instruction to be read. There is further provided a third pointer designating an address location which is next the address location designated by the first pointer. The generation and withdrawal of an instruction prefetch request is controlled by use of the address locations designated respectively by the second and third pointers at least when the prefetched instruction is written into the address location designated by the first pointer.

Fig. 2

## Information Processor having Instruction Prefetch Function

## BACKGROUND OF THE INVENTION

The present invention relates to an information processor and more particularly to a processor of a sequential control type including an instruction prefetch control circuit.

For a purpose of a high speed processing, a sequential control type processor includes an instruction prefetch control circuit. The sequential control type processor has a feature of executing sequentially a string of instructions except a branch instruction. The instruction prefetching utilizes this feature. More specifically, in case where a currently executed instruction is not the branch instruction, an instruction to be next executed is stored in an address location of a program memory, which is next an address location storing the currently executed instruction. A bus access control unit makes access to the program memory to prefetch an instruction without employing a program counter during a period of time when a data memory or peripheral input/output units are not required to be made access, and then stores the prefetched instruction into the processor. An instruction execution unit executes the prefetched instruction without making access to the program memory. Thus, the next instruction can be executed immediately.

The instruction prefetch control circuit includes in general a queue register having a plurality of register access for storing the prefetched instructions, a write-address designation circuit designating an address location of the queue register into which the prefetched instruction is to be written, and a read-address designation circuit designating an address location of the queue register into which the instruction to be read and supplied to the execution unit is stored. Since the queue register stores only a predetermined number of the instructions, a number of the instructions written into the queue register must be properly controlled. However, there may occur a condition of overwritting the instructions into the queue register and the instruction previously written into the queue register is thereby destroyed.

## SUMMARY OF THE INVENTION

Therefore, an object of the present invention is to provide an information processor including an improved instruction prefetch control circuit.

Another object of the present invention is to provide an information processor including an instruction prefetch control circuit in which an instruction prefetch bus cycle is activated consecutively without causing an overwritting to a queue register.

The present invention is characterized in that there is provided an address designation circuit producing address information representative of an address location next an address location of a queue register into which a prefetched instruction is to be written at least when the prefetched instruction is written and that an instruction prefetch request is produced from a prefetch request determination circuit by use of the address information of this address designation circuit, and the address information of a read-address designation circuit.

When the prefetched instruction is written into the queue register under a condition that only one register area is currently free in the queue register, the address information produced by the address designation circuit represents an updated address location which the write-address designation circuit will designate after the prefetched instruction is writted into the queue register. The address information of the read-address designation circuit is not changed when execution unit does not read the instruction from the queue register. Accordingly, the prefetch request determination circuit withdraws the instruction prefetch request when the prefetched instruction is written into the queue register. On the other hand, when two or more register regions are free in the queue register, the instruction prefetch request remains. Thus, the instruction prefetch bus cycle can be activated consecutively without causing overwriting to the queue register.

BRIEF DESCRIPTION OF THE DRAWINGS

The above and other objects, advantages and features of the present invention will be more apparent from the following description taken in conjunction with the accompanying drawings, in which

Fig. 1 is a block diagram representative of a microprocessor according to a first embodiment of the present invention;

Fig. 2 is a block diagram representative of an instruction queue shown in Fig. 1;

Fig. 3 is a circuit diagram representative of first and second write-pointers and a read-pointer shown in Fig. 2;

Fig. 4 is a circuit diagram representative of a prefetch request signal generator shown in Fig. 2;

Fig. 5A and 5B are timing charts representative of an circuit operation of the first embodiment;

Fig. 6 is a circuit diagram representative of a second write-pointer according to a second embodiment of the present invention;

Fig. 7 is a block diagram representative of an instruction queue according to a third embodiment of the present invention;

Fig. 8 is a circuit diagram representative of first and second write-pointers and a read-pointer shown in Fig. 7;

Fig. 9 is a timing chart representative of a circuit operation of the third embodiment; and

Fig. 10 is a circuit diagram representative of a second write-pointer according to a fourth embodiment of the present invention.


DETAILED DESCRIPTION OF THE EMBODIMENTS

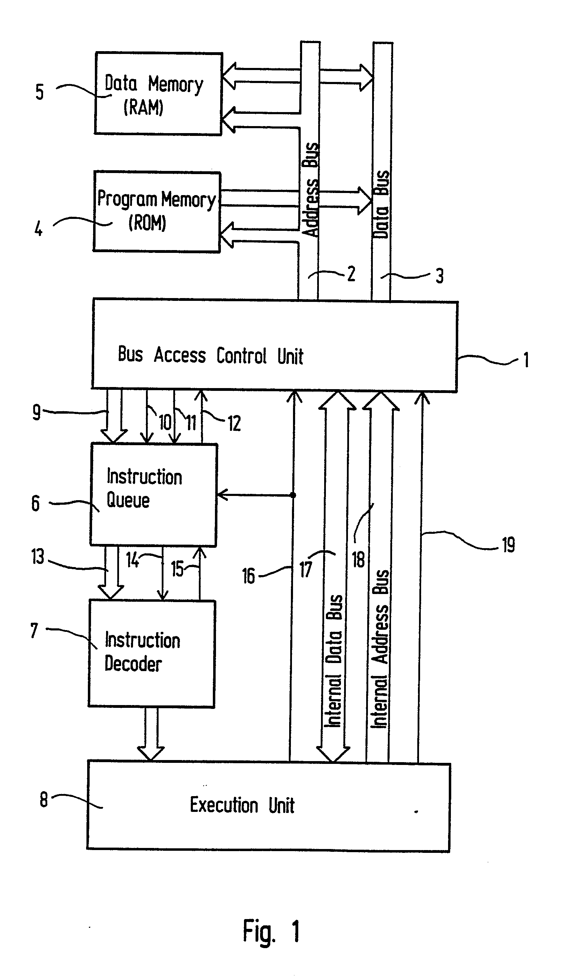

Referring to Fig. 1, a microprocessor according to a first embodiment of the present invention includes a bus access control unit 1 controlling an address bus 2 and a data bus 3. The bus access control unit 1 starts an instruction prefetch bus cycle in response to an instruction prefetch request signal 12. In that case, it outputs address information to the address bus 2 to make access to a program memory (ROM) 4 storing a string of instructions. The program memory 4 outputs to the data bus 3 an instruction stored in an address location designated by the address information. Thus, the bus access control unit 1 prefetches the instruction from the program memory 4 and then transfers the prefetched instruction via an instruction input bus 9 to an instruction queue 6 with an active level of a queue write-strobe signal 10 to store the prefetched instruction therein. When at least one instruction is stored into the instruction queue 6, a queue read-enable signal 14 is changed to have an active level. An instruction decoder 7 detects the active level of the queue read-enable signal 14 and reads the instruction from the instruction queue 6 via an instruction output bus 13 with an active level of a queue read-strobe signal 15 which is to be executed after an execution unit 8 has finished execution of a previous instruction. The instruction read from the instruction queue 6 is decoded by the decoder 7 and supplied to the execution unit 8. Thus, the execution unit 8 receives the instruction to be executed, from the instruction queue 6 in place of making access to the program memory 4. When the execution unit 8 requires to make access to the data memory 5 for an operand data read in the instruction executing procedure, it outputs an operand access request signal 19 and operand address information via an internal address bus 18 to the bus access control unit 1. In response thereto, the unit 1 makes access to the data memory 5 to read the required data therefrom and there to supply it to the execution unit 8 via an internal data bus 17. In a case of an operand data write-access, the data to be written is transferred to the bus access control unit 1 via the data bus 17 together with the access request signal 19, so that it is written into the designed address location of the data memory 5. When the execution unit 8 executes a branch instruction, it outputs a branch address to the internal address bus 18 and simultaneously produces a jump signal 16 representative of the execution of the branch instruction. In response to the jump signal 16, the bus access control unit 1 makes access to the program memory 4 by use of the branch address supplied thereto via the internal address bus 17 to fetch the instruction from the memory 4 and then transfers the fetched instruction to the instruction queue 6. The jump signal 16 is further supplied to the instruction queue 6 to initialize internal control circuits thereof.

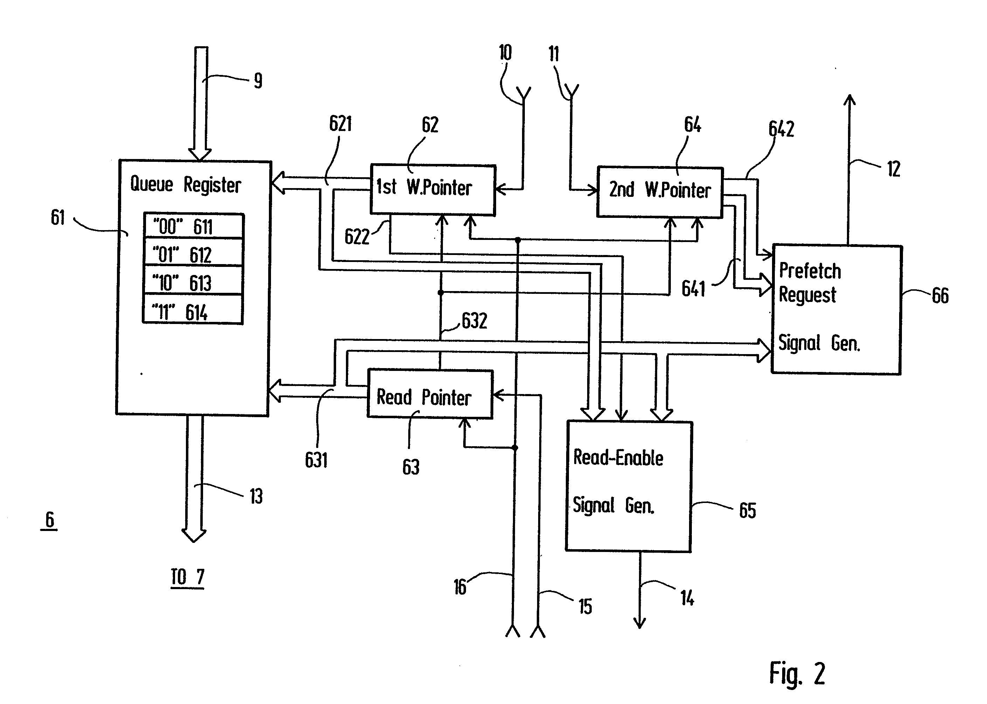

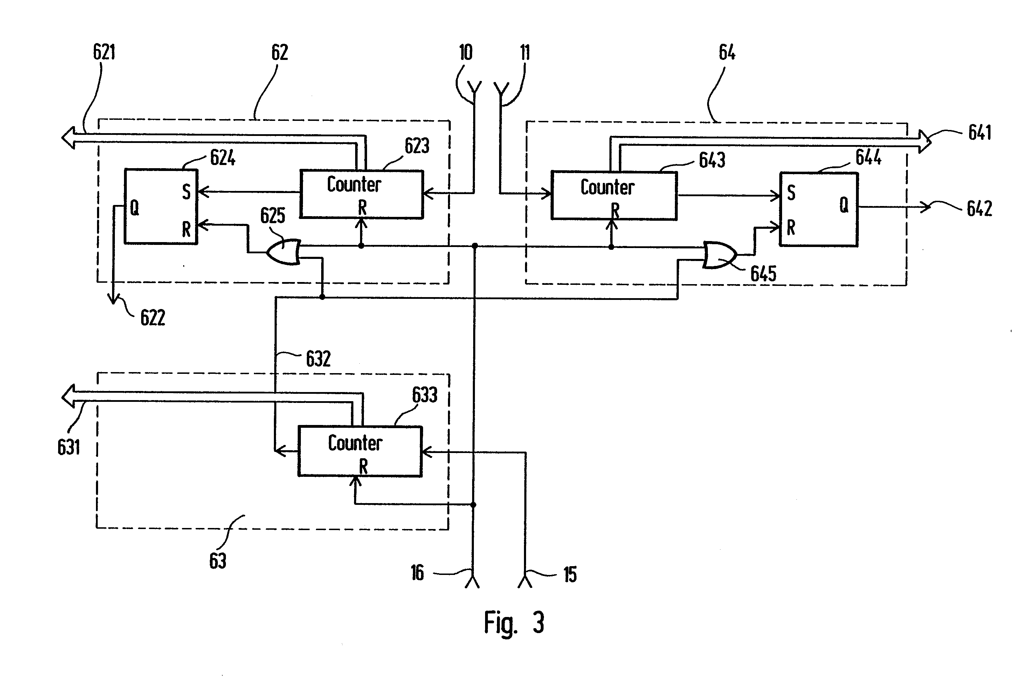

Referring to Fig. 2, the instruction queue 6 includes a queue register 61 having a plurality of register areas for storing the prefetched instructions. In this embodiment, four register areas 611, 612, 613 and 614 are provided in the queue register 61 and allotted with addresses "00", "01", "10" and "11", respectively. A first write-pointer 62 produces write-address information 621 to designate one of the addresses of the register areas 611, 612, 613 and 614 into which the prefetched instruction is to be written, and it updates the address information 621 in response to the queue write-strobe signal 10 after the prefetched instruction is written in one of the register areas 611, 612, 613 and 614. As shown in Fig. 3, the first write-pointer 62 includes a two-bit counter 623 which increments its count value in synchronism with the falling edge of the queue write-strobe signal 10 supplied thereto from the bus access control unit 1. The count value of the counter 623 is supplied to the queue register 61 as the write-address information 621 designating the register area 611, 612, 613 and 614 into which the prefetched instruction is to be written. A carry signal of the counter 623 is supplied to a set terminal S of an S-R type flip-flop (called hereinafter "S-R F/F") 624 and stored therein, and a Q-output of the S-R F/F 624 is produced as a first write-pointer carry flag 622. Turning back to Fig. 2, a read-pointer 63 produces read-address information 631 to designate are of the addresses of the register areas 611, 612, 613 and 614 from which the instruction is to be read out to the instruction decoder 7. The read-address information 631 is updated by the queue read-strobe signal 15 after the instruction decoder 7 fetches the instruction read from the queue register 61. As shown in Fig. 3, the read-pointer 63 includes a two-bit counter 633 which increments its count value in synchronism with the falling edge of the queue read-strobe signal 15 supplied thereto from the instruction decoder 7. The count value of the counter 633 is outputted as she read-address information 631. A carry signal of the counter 633 is outputted as a read-pointer carry flag 632 which is in turn supplied via an OR gate 625 to the S-R F/F 624 to reset the same. The jump signal 16 produced by the execution unit 8 resets the counters 623 and 633 and the S-R F/F 624.

Turning again back to Fig. 2, a second write-pointer 64 is provided in accordance with the present invention to properly indicate the writing address of the queue register area in response to a prefetch-acknowledge signal 11 supplied thereto from the bus access control unit 1. The bus access control unit 1 generates the prefetch-acknowledge signal 11 when it accepts the instruction prefetch request signal 12 supplied thereto from the instruction queue 6. The generation of the prefetch-acknowledge signal 11 is one of features of this embodiment. As shown in Fig. 3, the second write-pointer 64 includes a two-bit counter 643 which increments its count value in synchronism with the falling edge of the prefetch-acknowledge signal 11. The count value of the counter 643 is led out as an output 641 of the second write-pointer 64, and a carry signal of the counter 643 is stored into an S-R F/F 644 which in turn produces a second write-pointer carry flag 642. The counter 643 is reset by the jump signal 16 and the S-R F/F 644 is reset via an OR gate 645 by the jump signal 16 or the read-pointer carry flag 632.

Since the number of the register areas 611 to 614 in the queue register 61 is four, only four instructions can be stored in the queue register 61. When the register area 611, 612, 613 or 614 designated by the address information 621 of the first write-pointer 62 stores a non-executed instruction, the instruction prefetching must be inhibited. That is, the prefetch request signal 12 is required to be changed to an inactive level to withdraw the instruction prefetch request, when four instructions are stored in the queue register 61 or when the first write-pointer 62 designates the register area 611, 612, 613 or 614 already storing the non-executed instruction. Permission of the prefetch request and withdrawal of such permission (or inhibition of the prefetch request) can be shown in the following TABLE-1 under the conditions of the write-address information, read-address information and write-pointer carry flag.

### TABLE-1

| Write Pointer Carry Flag | | 0 | 0 | 0 | 0 | 1 | 1 | 1 | 1 |
|---|---|---|---|---|---|---|---|---|---|
| Write Address | | "00" | "01" | "10" | "11" | "00" | "01" | "10" | "11" |
| Read Address | "00" | Q | Q | Q | Q | X | – | – | – |
| | "01" | – | Q | Q | Q | Q | X | – | – |
| | "10" | – | – | Q | Q | Q | Q | X | – |
| | "11" | – | – | – | Q | Q | Q | Q | X |

In TABLE-1, the mark "Q" represents that the prefetch is permitted and the instruction prefetch request can be generated. That is, the prefetch request signal 12 takes an active level, logic 1, for example. The mark "X" represents the withdrawal or inhibition of the instruction prefetch request, so that the prefetch request signal 12 is changed to the inactive level, logic 0. The mark "-" represents that such combinations as shown in TABLE-1 of the write-address information, read-address information and the write-pointer carry flag are not present. The prefetch request signal generator 66 is provided to generate the prefetch request signal 12 as indicated in TABLE-1.

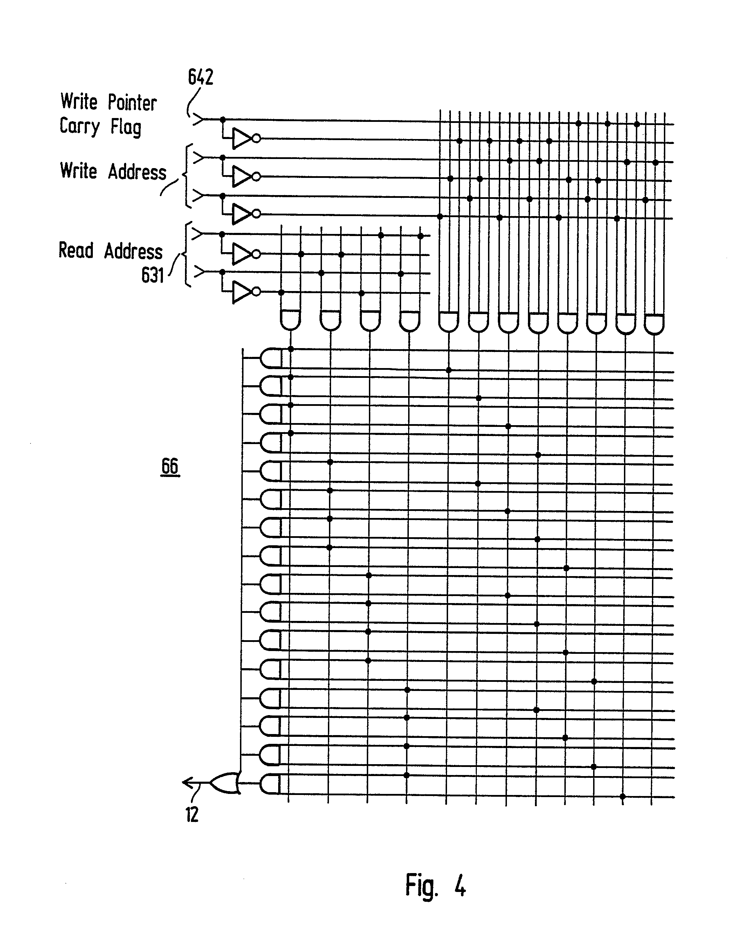

In this embodiment, the prefetch request signal generator 66 receives the output 641 and the carry flag 642 produced by the second write-pointer 64 as the write-address information and the write-pointer carry flag, respectively, in order to activate consecutively an instruction prefetch bus cycle and to avoid overwriting the instructions into the queue register 61. Referring to Fig. 4, the prefetch request signal generator 66 includes five inverters, twenty-eight AND gates and one OR gate which are connected as shown in Fig. 4 to output a high-level signal at the line 12 (i.e., the output end of the OR gate) whenever the input lines 642, 641 and 631 take the respective levels indicated in TABLE-1 to result the mark Q therein.

When no instruction is stored in the queue register 61 or when the register area 611, 612, 613 or 614 designated by the read-pointer 63 does not store an instruction, the read-enable signal 14 is required to be changed to the inactive level to inhibit the instruction read operation of the decoder 7. For this purpose, a read-enable signal generator 65 is provided to control the level of the read-enable signal 14 as shown in the following TABLE-2 in response to the write-address information 621 and the carry flag 622 from the first write-pointer 62 and the read-address information 631 from the read-point 63.

## TABLE-2

| Write Pointer Carry Flat | | 0 | 0 | 0 | 0 | 1 | 1 | 1 | 1 |
|---|---|---|---|---|---|---|---|---|---|
| Write Address | | "00" | "01" | "10" | "11" | "00" | "01" | "10" | "11" |
| Read Address | "00" | X | R | R | R | R | - | - | - |
| | "01" | - | X | R | R | R | R | - | - |
| | "10" | - | - | X | R | R | R | R | - |
| | "11" | - | - | - | X | R | R | R | R |

In TABLE-2, the mark "R" represents that the read-enable signal 14 takes the active level, logic 1, and therefore the instruction decoder 7 can fetch the instruction from the instruction queue 6. The mark "X" represents that the read-enable signal 14 is changed to the inactive level, logic 0, so that the instruction read of the decoder 7 is inhibited. The mark "-" represents that such combinations as shown in TABLE-2 of the write-address information, read-address information and carry flag are not present. Although the circuit construction of the read-enable signal generator 65 is not shown, it can be constructed by a plurality of gate circuits similarly to the prefetch request signal generator 66 shown in Fig. 4.

Referring to Figs. 2 and 3, the first and second write-pointers 62 and 64 are reset by the read-pointer carry flag 632 or the jump signal 16, and they also take a reset condition in an initial state responsive to a power-on or a system reset. The content of the second write-pointer 64 is updated by the prefetch-acknowledge signal 11 which is generated when the bus access control unit 1 accepts the instruction prefetch request, and the content of the first write-pointer 62 is updated by the queue write-strobe signal 10 which is generated when the bus access control unit writes the prefetched instruction into the queue register 61. Accordingly, the content of the second write-pointer 64 is larger by one than the content of the first write-pointer 62 during the period from the falling edge of the prefetch-acknowledge signal 11 to the falling edge of the queue write-strobe signal 10, and the contents of the first and second write-pointer 62 and 64 are equal to each other during the remaining period.

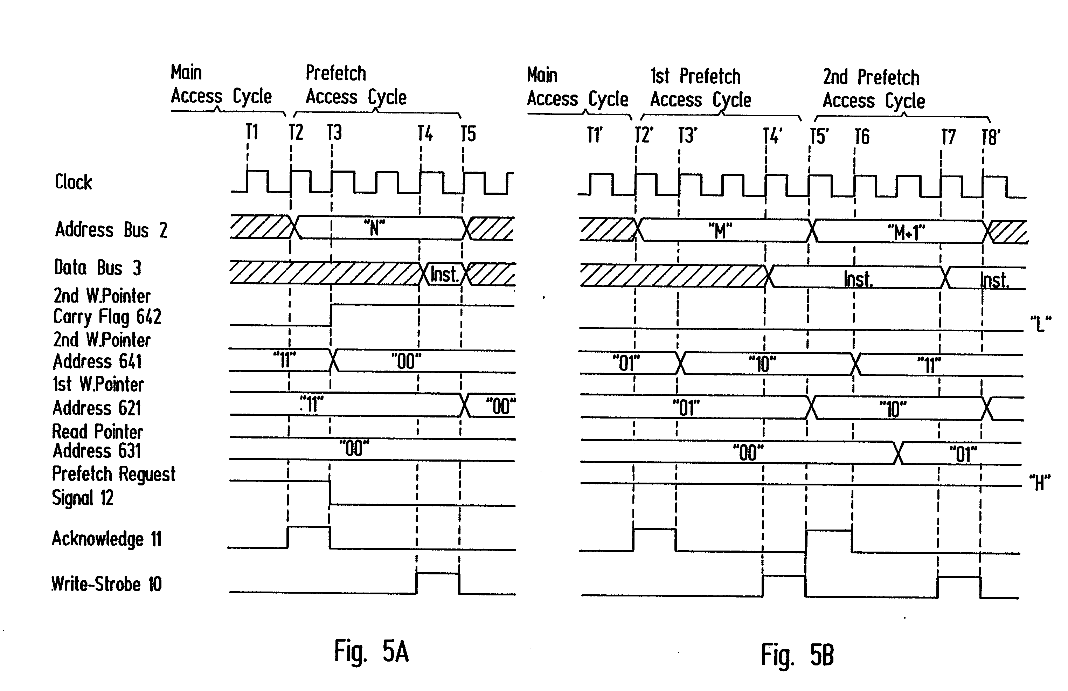

Referring now to Fig. 5A, at a time point $T_i$ just before the end of a main access cycle wherein the bus access control unit 1 makes access to the data memory 5, the address information 641 and the carry flag 642 of the second write-pointer 64 are "11" and logic 0, respectively, and the read-address information 631 of the read-pointer 63 is "00". Therefore, the prefetch request signal generator 66 generates the prefetch request signal 12 of the active level (logic 1). The bus access control unit 1 accepts the prefetch request signal 12 and activates the instruction prefetch access cycle at a time point $T_2$ in a case of no request of the main access cycle. That is, the bus access control unit 1 outputs at the time point $T_2$ address information "N" to the address bus 2 to make access to the program memory 4. Simultaneously, the bus access control unit 1 outputs the prefetch-acknowledge signal 11 to the second write-pointer 64. The prefetch-acknowledge signal 11 falls down to the low level at a time point $T_3$. The address information 641 of the second write-pointer 64 thereby changes to "00" at the time point $T_3$ and the carry flag 642 thereof changes to logic 1. At this time, the instruction decoder 7 does not fetch the instruction from the instruction queue 6, and therefore the read-address information 631 of the read-pointer 63 holds the data of "00". As a result, the prefetch request signal generator 66 changes the prefetch request signal 12 to the low level at the time point $T_3$ to withdraw the instruction prefetch request, as apparent from TABLE-1. In a time point $T_4$ in the prefetch access cycle, the instruction read from the program memory 4 appears on the data bus 3. The bus access control unit 1 produces the queue write-strobe signal 10 and writes the instruction on the data bus 3 into the fourth register area 614 designated by the write-address information 621 of "11" from the first write-pointer 62. Simultaneously with writing the instruction into the fourth register area 614, i.e. during the period from the time point $T_4$ to a fine point $T_5$, the bus access control unit 1 determines to active the prefetch access cycle or the main access cycle. At this time, since the prefetch request signal 12 takes logic 0, the prefetch access cycle is not actived even when the main access cycle is not required. Thus, the overwriting of the instructions to the queue register 61 is prevented. In response to the falling edge of the queue write-strobe signal 10 at the time point $T_5$, the address information 621 of the first write-pointer 62 changes to "00".

If the prefetch request signal generator 66 employs the address information 621 and the carry flag 622 of the first write-pointer 62, the prefetch request signal 12 would maintain logic 1 when the bus access control unit 1 carries out the access determination during the period of the time points $T_4$ to $T_5$. As a result, the prefetch access cycle would be activated consecutively in a case of no request of the main access cycle and the overwriting of instructions to the queue register 61 would thereby occur.

According to the embodiment of the invention, the prefetch request signal 12 is changed to logic 0 before the access control unit 1 carries out the access determination, as shown in Fig. 5A, and therefore the overwritint to the queue register 61 does not occur. On the other hand, as shown in Fig. 5B, when the address information 641 and the carry flag 642 of the second write-pointer 64 are respectively "01" and logic 0 and the address information 631 of the read-pointer 63 is "00" at a starting time point ($T_2'$) of a first prefetch access cycle, the prefetch request signal 12 takes logic 1 during the access determination period ($T_4'$ to $T_5'$). A second prefetch access cycle is thereby activated successively.

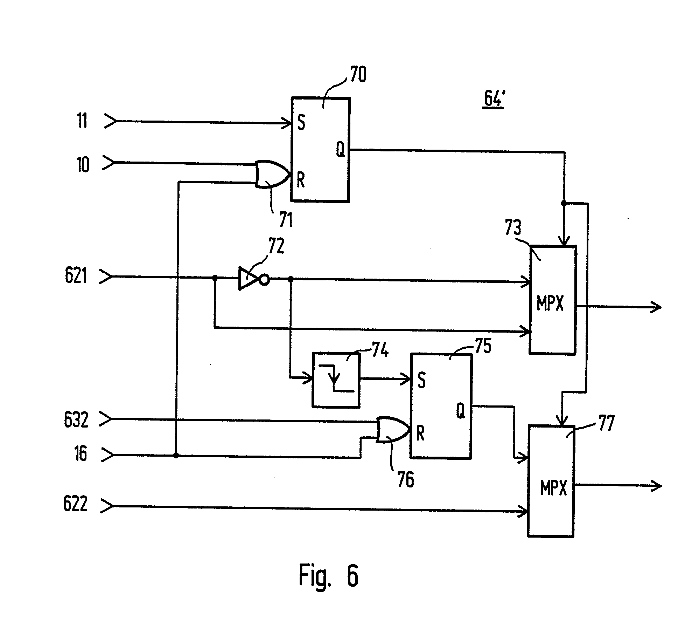

Referring to Fig. 6, a second write-pointer 64' according to a second embodiment of the present invention is shown. In this embodiment, the queue register 61 shown in Fig. 1 includes only two register regions, and therefore the number of the instructions which can be prefetched is limited to two. Each of the counters 623 and 633 shown in Fig. 3 is of a one-bit construction. In the second write-pointer 64' shown in Fig. 6, a first multiplexer 73 receives at a first input terminal the write-address information 621 of the first write-pointer 62 and at a second input terminal the inverted information thereof via an inverter 72. A second multiplexer 77 receives an output of an S-R F/F 75 and the carry flag 622 of the first write-pointer 62. The S-R F/F 75 is set by an output of an inversion detector 74 which detects the inversion from logic 1 to logic 0 of an output of an inverter 72, and reset via an OR gate 76 by the jump signal 16 and the carry flag 632 of the read-pointer 63. An S-R F/F 70 is set by the prefetch-acknowledge signal 11 and reset via an OR gate 71 by the queue write-strobe signal 10 or the jump signal 16. The output of the S-R F/F 70 is used to control the switching operation of the multiplexers 73 and 77. More specifically, during the period from the generation of the prefetch-acknowledge signal 11 to the generation of the queue write-strobe signal 10, the output of the inverter 72 (i.e., the inverted information of the output 621 of the first write-pointer 62) and the output of the S-R F/F 75 are supplied to the prefetch request signal generator 66 via the multiplexers 73 and 77, respectively, and during the remaining period or upon the generation of the jump signal 16, the output 621 and the carry flag 622 of the first write-pointer 62 are supplied to the prefetch request signal generator 66 as they are. Thus, the same effect as the first embodiment is obtained. The second write-pointer 64' can be constructed a counter of one-bit construction and a flip-flop.

In recent microprocessors, a bus access cycle has been made at a high speed, and a microprocessor including a cache memory on a single semiconductor chip, in particular, makes access to the cache memory in one clock. On the other hand, in the above-mentioned embodiment, the address information 641 and the carry flag 642 of the second write-pointer 64 change after one clock cycle period has elapsed from the starting time point of the prefetch access cycle, as shown in Fig. 5A. For this reason, the construction shown in Figs. 1 and 2 is not applicable to such a microprocessor as performing a bus access cycle in one clock.

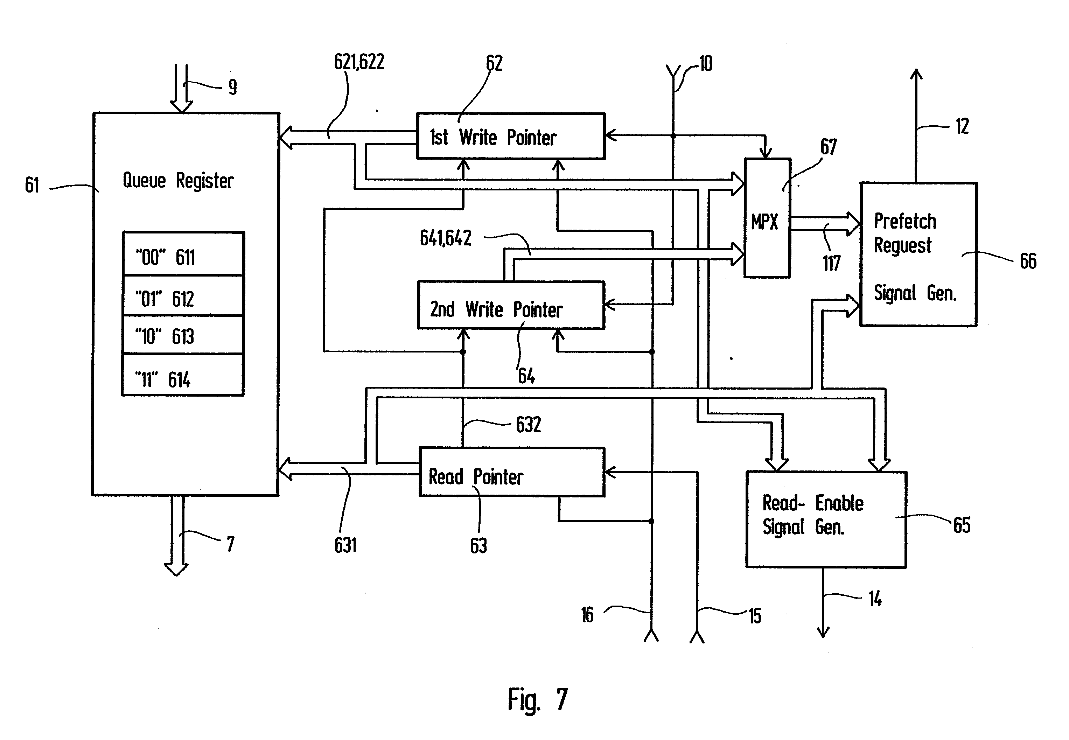

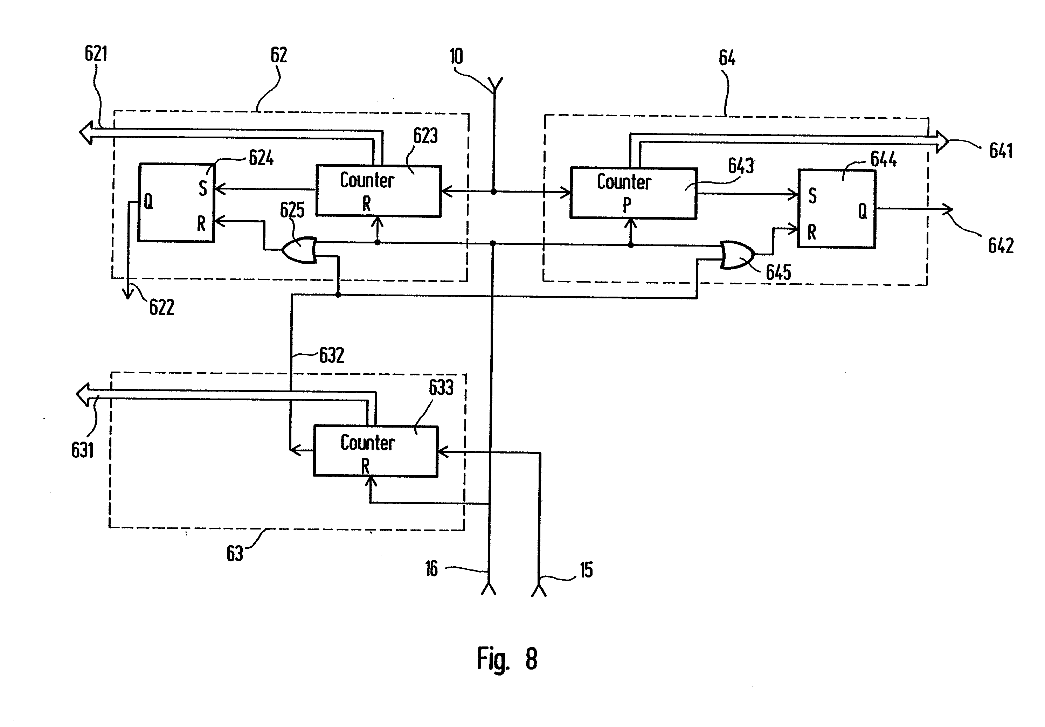

An instruction queue for solving this problem is shown in Fig. 7 as a third embodiment of the present invention. First and second write-pointers and a read-pointer shown in Fig. 7 are illustrated in Fig. 8. In these figures, the same constituents as those shown in Figs. 2 and 3 are denoted by the same reference numerals. In this embodiment, the second write-pointer 64 updates its count value in response to the queue write-strobe signal 10, not to the prefetch-acknowledge signal 11. However, a counter 6431 of the second write-pointer 64 is preset to data of "01" in response to the jump signal 16 and in the initial state. Moreover, a multiplexer 67 is provided to select the information 621 and 622 of the first write-pointer 62 or the information 641 and 642 of the second write-pointer 64 in response to the queue write-strobe signal 10, the selected information being transferred to the prefetch request signal generator 66. When the queue write-strobe signal 10 takes logic 1 (i.e., the high level), the multiplexer 67 selects and outputs the information 641 and 642 of the second write-pointer 64. On the other hand, when the signal 10 takes logic 0 (i.e., the low level), the multiplexer 67 selects and outputs the information 621 and 622 of the first write-pointer 62.

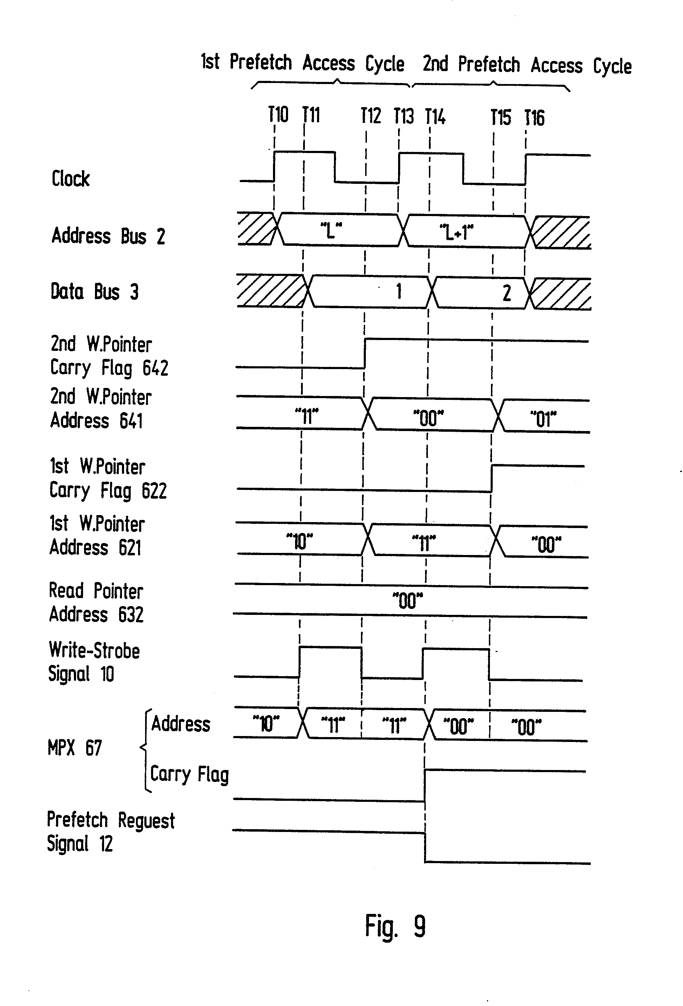

Referring now to Fig. 9, at a starting time point $T_{10}$ of a first prefetch access cycle, the address information 621 of the first write-pointer 62 is "10", and hence the address information 641 of the second write-pointer 64 is "11". The bus access control unit 1 output address information "L" to the address bus 2 to prefetch an instruction from the program memory 4 and at a time point $T_{11}$ writes the prefetched instruction into the third register area 613 designated by the write-address information "10" of the first write-pointer 62 with supplying the high level queue write-strobe signal 10. At this time, the multiplexer 67 transfers the address information 641 of "11" and the carry flag 642 of logic 0 from the second write-pointer 64 to the prefetch request signal generator 66, so that the prefetch request signal 12 holds logic 1. At a time point $T_{12}$, since the queue write-strobe signal 10 changes to the low level, the second write-pointer 64 produces the address information 641 of "00" and the carry flag 642 of logic 1. However, the multiplexer 67 selects the address information 621 of "11" and the carry flag 622 of logic 0 produced by the first write-pointer 62. The prefetch request signal 12 thereby holds logic 1. Therefore, the bus access control unit 1 activates a second prefetch access cycle at a time point $T_{13}$ and outputs next address information "L + 1" to the address bus 2. At a time point $T_{14}$, the bus access control unit 1 writes the prefetched instruction into the fourth register area 614 of the queue register 61 with supplying the high level queue write-strobe signal 10. Since the signal 10 is logic 1, the prefetch request signal generator 66 receives the address information of "00" and the carry flag of logic 1 via the multiplexer 67. The read-address information 632 of the read-pointer 63 holds "00" because of no instruction fetching operation. As a result, the prefetch request signal 12 is changed to the low level, as apparent from TABLE-1. Thus, the bus access control unit 1 judges that a third prefetch access cycle must not be activated successively. Even when the queue write-strobe signal changes to the low level, the outputs of the multiplexer 67 do not change, so that the prefetch request signal 12 holds the low level. Thus, the prefetch access cycle can be activated successively with one clock cycle period without overwriting instructions in the queue register 61.

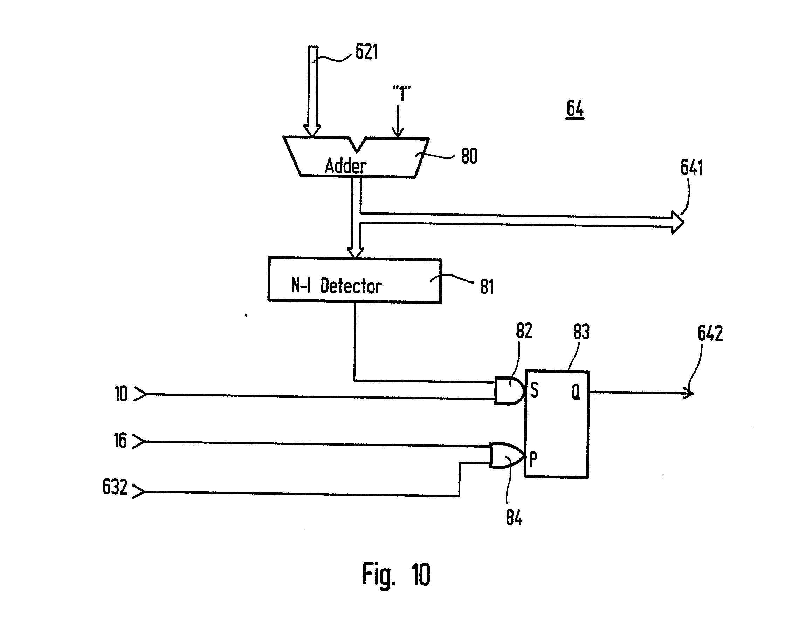

The second write-pointer 64 can be constructed without employing a counter, as shown in Fig. 10. More specifically, an adder 80 has a first input node supplied with the write-address information 621 and a second input node supplied with data of "1" and adds "1" to the information 621. The added result is outputted as address information 641 of the second write-pointer 64. Accordingly, the address information 641 is larger than the address information 621 by one. The output of the adder 80 is further supplied to a detector 81 which detects a value of "N-1" of the address information 641, wherein N represents the number of the register areas of the queue register 61 and is thus four in this embodiment. That is, when the address information 641 is 3 ( = "10"), the output of the detector 81 takes logic 1. An S-R F/F 82 is set via an AND gate 83 when both of the output of the detector 81 and the queue write-strobe signal 10 are logic 1, and is reset via an OR gate 84 by the jump signal 16 or the read-pointer carry flag 632. The output of the S-R F/F 82 is produced as the second write-pointer carry flag 642. Thus, the second write-pointer 64 shown in Fig. 10 has the same function as that shown in Fig. 8.

The present invention is not limited to the above embodiments, but may be changed and modified without departing from the scope and spirit of the invention.

## Claims

1. An information processor comprising instruction storage means including a plurality of address locations, write-address designation means for generating first address information designating one of said address locations of said instruction storage means in which an instruction is to be written, instruction prefetching means for prefetching an instruction from a program memory and writing the prefetched instruction into one of said address locations of said instruction storage means designated by said write-address designation means, read-address designation means for generating second address information designating one of said address locations of said instruction storage means from which an instruction is to be read, means for generating third address information designating one of said address locations which is next the address location designated by said first address information at least when said instruction prefetching means writes the prefetched instruction into the address location of said instruction storage means designated by said first address information, and means responsive to said second and third address information for determing whether or not an instruction prefetch request is supplied to said instruction prefetching means.

2. The processor as claimed in claim 1, wherein said instruction prefetching means generates a prefetch-acknowledge signal when accepting said instruction prefetch request and said third address information generating means updates said third address information in response to said prefetch-acknowledge signal, said write-address designation means updating said first address information after the prefetched instruction is written into the address location designated by said first address information.

3. The processor as claimed in claim 1, wherein said instruction prefetching means generates a write-strobe signal when writing the prefetched instruction into the address location designated by said first address information and said third address information is larger than said first address information by one, said third address information is supplied to said determining means when said write-strobe signal is generated.

4. The processor as claimed in claim 3, wherein said determining means receives said first address information when said write-strobe signal is not generated.

5. An information processor comprising a plurality of register areas, a first pointer generating first address information for pointing one of said register areas into which an instruction is to be written and updating said first address information after the instruction is written into the register area pointed by the first address information before updated, a second pointer generating second address information for pointing one of said register areas which stores an instruction to be read and updating said second address information after the instruction is read from the register area pointed by the second address information before updated, a third pointer generating third address information for pointing one of said register areas and updating said third address information before the instruction is written into the register area pointed by the first address information before updated, a prefetch request signal generator responding to said second and third address information and generating a prefetch request signal having a first state enabling an instruction prefetching or a second state disenabling the instruction prefetching, and a bus access control unit prefetching an instruction from a program memory in response to said first state of said prefetch request signal and writing the prefetched instruction into the register area pointed by said first address information.

6. The processor as claimed in claim 5, wherein said bus access control unit generates an acknowledge-signal before writing the prefetched instruction into the register area pointed by said first address information and said third pointer updates said third address information in response to said acknowledge-signal.

7. An information processor comprising a plurality of register areas, a first pointer generating first address information for pointing one of said register areas into which an instruction is to be written and updating said first address information after the instruction is written into the register area pointed by the first address information before updated, a second pointer generating second address information for pointing one of said register areas which stores an instruction to be read and updating said second address information after the instruction is read from the register area pointed by the second address information before updated, a third pointer generating third address information for pointing one of said register areas which is next the register area pointed by said first address information, a bus access control unit making access to a program memory to prefetch an instruction in response to an instruction prefetch request and writing the prefetch instruction into the register area pointed by said first address information, and a prefetch request determination circuit determining to generate or withdraw said instruction prefetch request in response to said second and third address information during a first period of time when said bus access control unit writes the prefetched instruction into the register area, said prefetch request determination circuit determing to generate or withdraw said instruction prefetch request in response to said first and second address information during a remaining period.

8. The processor as claimed in claim 7, further comprising a multiplexer selecting one of said first and third address information and transferring the selected address information to said prefetch request determination circuit, said bus access control unit producing a write-strobe signal when writing the prefetched instruction into the register area, said multiplexer selecting and transferring said third address information when said write-strobe signal is generated and said first address information when said write-strobe signal is not generated.

Fig. 1

Fig. 2

0 284 100

Fig. 3

Write Pointer
Carry Flag

Write Address

Read Address

631

642

66

12

**Fig. 4**

Fig. 5A

Fig. 5B

Main Access Cycle — Prefetch Access Cycle

Main Access Cycle — 1st Prefetch Access Cycle — 2nd Prefetch Access Cycle

Clock

Address Bus 2

Data Bus 3

2nd W.Pointer Carry Flag 642

2nd W.Pointer Address 641

1st W.Pointer Address 621

Read Pointer Address 631

Prefetch Request Signal 12

Acknowledge 11

Write-Strobe 10

Fig. 6

Fig. 7

Fig. 8

0 284 100

1st Prefetch Access Cycle  2nd Prefetch Access Cycle

Fig. 9

621

"1"

64

Adder 80

641

N-I Detector 81

82 83 642

10 >

16 >

632 >

S Q

P

84

Fig. 10